# EUROPEAN PATENT SPECIFICATION

(11) **EP 1 317 680 B1**
(45) Date of publication and mention of the grant of the patent: **19.05.2004**
(21) Application number: 01966902.7
(22) Date of filing: 04.09.2001
(51) Int. Cl.: G01V 8/00

(54) **SOLAR INFRARED GROUND CLUTTER SUPPRESSOR**
SONNEN-INFRAROT-BODENSTÖRUNGSUNTERDRÜCKER
SUPPRESSEUR DE PARASITES SOLAIRE INFRAROUGE UTILISE AU SOL

(30) Priority: 13.09.2000 US 661287
(43) Date of publication of application: 11.06.2003
(73) Proprietor: HER MAJESTY THE QUEEN IN RIGHT OF CANADA AS REPRESENTED BY THE MINISTER OF NATIONAL DEFENCE OF HER MAJESTY'S CANADIAN GOV., Ottawa K1A OK2 (CA)
(72) Inventor: MCFEE, John, E., Medicine Hat, Alberta T1B 2T4 (CA)
(74) Representative: Jackson, Derek Charles
(86) International application number: PCT/CA2001/001241
(87) International publication number: WO 2002/023227

(56) References cited:
- FR-A- 2 754 350
- US-A- 3 278 746
- US-A- 5 371 358
- US-A- 5 602 393
- US-A- 5 999 211

## Description

### FIELD OF THE INVENTION

The present invention relates, in general, to an apparatus for detecting landmines and, in particular, to an apparatus with an infrared detector to obtain thermal signatures of the soil surface where a buried landmine might exist and which is particularly designed for mine detection during daylight hours.

### BACKGROUND OF THE INVENTION

It has been estimated that there are many tens of millions of anti-personnel (AP) and anti-tank (AT) mines scattered on the ground surface or buried in the ground in about 64 countries. These mines pose a serious threat to any military operation including UN peacekeeping operations and also to civilian populations in those countries. In addition, the effect on the local economy is often devastating since a mined area can never be safe until it is thoroughly cleared of mines.

The recent international treaty to ban the use of antipersonnel mines by most countries of the world has provided a significant push to eliminate these weapons from the arsenal of mankind and a welcome support to the cause for demining. Modern mines, however, contain very little metal and are difficult to detect using conventional electromagnetic techniques. There are, as a result, currently about 20 methods for mine detection at various stages of development. Amongst the various detection methods under development, passive infrared (IR) imaging, electromagnetic methods, ground probing radar (GPR) , and thermal neutron activation (TNA) are perhaps the most promising techniques. While each of these methods have their respective limitations, a fusion of data from a number of these sensors may provide a system that would be acceptable for many applications.

Passive IR imaging is, amongst the methods under development, particularly attractive due to the simplicity of the technique, remote-sensing capability and relatively lower cost as compared to other methods. This method, however, has its own particular problems. The mine signature obtained with passive IR imaging is strongly dependent on the diurnal variations in solar illumination, type of soil, soil moisture and temperature gradient of the soil. Active infrared methods have also been proposed for mine detection. P. Li et al in an article "Infrared Imaging of Buried Objects by Thermal Step-Function Excitations", (Appl. Optics, Vol. 34, No. 25, pages 5809-5816, 1995) obtained results which indicate the possibility of imaging surface and buried mines through the use of thermal step function excitation using IR heating lamps. Another active IR imaging technique is described by S.M. Khanna et al in an article "New Hybrid Remote Sensing Method using HPM Illumination/IR Detection for Mine Detection: [Proceeding of SPIE Conference 3392, (Aerospace 98) on Detection and Remediation Technologies for Mines and Minelike Targets III]. S.M. Khanna et al described, in that article, a method using high-power microwave (HPM) illumination and passive infrared (IR) imaging for the detection of buried landmines. Active and passive IR imaging, however, provide limited target signature during daylight hours due to background clutter created by solar radiation being scattered by random irregularities on the ground surface.

In passive IR imaging technology, the IR imager may be mounted on an airborne platform and oriented to look downward or carried by a ground vehicle or person and oriented at a slant angle from the vertical. A buried object may then be detected by the imager by observation of a difference in radiation emitted by the ground immediately over the object and that of nearby ground. That difference usually manifests itself as a blob-shaped area which appears lighter or darker than the surrounding ground in the image. The emitted IR radiation detected by the imager is generally that due to a black body or grey body and is ultimately caused by the diurnal variation of the solar radiation incident on the ground resulting in differential heating and cooling of the body and the surrounding ground. The difference in emitted radiation between a mine and non-mine location is due to differences in the soil surface (caused by disturbance of the soil at a buried mine location) and the difference in thermal properties of an undisturbed site versus the disturbed soil column over the mine and by the thermal properties of the mine itself Most IR imaging work has been done in the medium wavelength band (MWIR, nominally between 3000 to 5000 nanometers) and long wave length or thermal band (LWIR or TIR, nominally between 8000 to 12000 nanometers) by commercial off-the-shelf (COTS) imagers which exists for both those bands.

The performance of daytime mine detection by infrared imaging is significantly worse, on average, than the performance of nighttime imaging. The probability of detection (Pd) in the daytime is generally significantly lower and the false alarm rate (FAR) significantly higher than at night. The daytime solar radiation scatters from random irregularities and inhomogeneities in the ground surface resulting in this lower Pd and higher FAR. The solar radiation that causes this clutter is, of course, absent at night.

P. Li et al in an article entitled "Infrared imaging of buried objects by thermal step-function excitations" that was published on 1 Sep 1995 in Applied Optics, Vol. 34, No. 25 recognized the problem caused by solar interference. P. Li et al in the first paragraph of that article stated that "Recent advances in infrared detectors and closed-cycle crycooler technology have led to a new generation of moderately priced, rugged, portable cameras operating in the desirable long wavelength range (8-12 µm), where the solar interference is considerable less than that at the shorter wavelength range (3-5 µm)."

J.-R. Simard in a DREV-R-9615 publication dated 17 Mar 97 and entitled "Theoretical and Experimental Characterizations of the IR Technology for the Detection of Low-Metal and Nonmetallic Buried Landmines" also recognized the problem associated with solar clutter. J.-R. Simard mentions in paragraph (1) on page 81 that "it has been observed by inspecting the daytime video recordings that the MWIR camera shows much higher sensitivity to extrinsic temperature noise" and that "It is believed that this higher extrinsic noise sensitivity originates from the higher sun radiation content in the MWIR band, which increases the apparent temperature clutters of the soil surface." J.-R. Simard then suggested that "It may be possible to reduce this effect by using optical filters" but then states that "the use of filters will also reduce the incoming radiative signal which may deteriorate the intrinsic temperature sensitivity." Although J.-R. Simard has suggested using optical filters, no indications have been given as to what type of filters might be suitable without also reducing the incoming radiative signal to an undesirable level.

US 3 278 746 A (Fiat, Gideon) discloses a two band infrared imaging system for geophysical survey and possible landmine detection. All of the bands selected are chosen to pass solar radiation. The Fiat, Gideon system is intended for use on an aircraft, and is not intended for or capable of ground use.

### SUMMARY OF THE INVENTION

It is an object of the present invention to provide a landmine detector by infrared imaging to obtain thermal signatures of the soil surface where a buried landmine might exist with reduced detrimental effects of background clutter created by solar radiation during daylight hours.

The landmine detector of the present invention comprises an infrared camera mounted on a vehicle for travel along the ground and positionable to obtain thermal signatures of a soil surface near the vehicle where a buried landmine might exist with an optical band filter positioned to allow radiation to be transmitted to the camera's infrared sensor through the filter, the optical band filter being one selected to pass radiation in at least one wavelength band where solar radiation is highly attenuated at the earth's surface due to absorption by the atmosphere, the filter attenuating transmission of radiation outside of any bands selected.

### DESCRIPTION OF THE DRAWINGS

The invention will now be described in more detail with reference to the accompanying drawing in which:

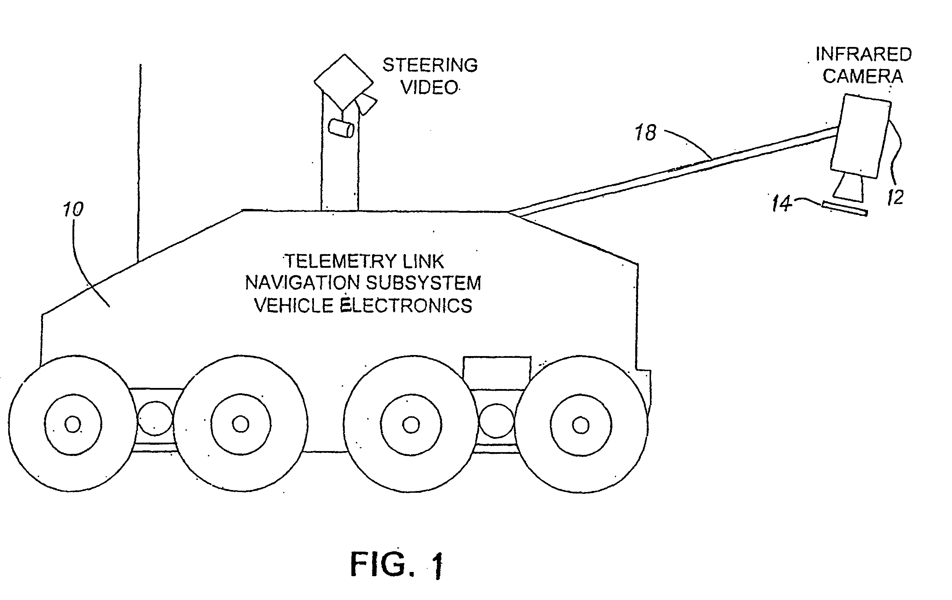

Figure 1 is a schematic side view of a landmine detector vehicle according to one embodiment of the present invention.

### DESCRIPTION OF THE PREFERRED EMBODIMENT

Passive infrared (IR) imaging is a technology which has been used frequently in the past for the detection of buried objects such as buried landmines. In that technology, the imager may be mounted on an airborne platform, oriented to look downward, or on a ground vehicle or carried by a person and oriented at a slant from the vertical. The buried object is detected by imaging the difference in radiation emitted by the surface of the ground immediately over the object and the nearby surface. The difference in emitted radiation usually manifests itself as a blob-shaped area which appears lighter or darker than the surrounding ground in the image and is caused by the diurnal variation of solar radiation incident on the ground. The difference in emitted radiation between a mine and non-mine location is due to differences in the soil surface (caused by soil disturbance at the mine location) and the difference in thermal properties of undisturbed sites versus the disturbed column over the mine and the mine itself Most of the work has been done in the medium wave length band (MWIR, nominally between 3000 to 5000 nanometers) and long wave length or thermal band (LWIR or TIR, nominally between 8000 to 12000 nanometers). Passive IR imaging techniques for mine detection is described by J.-R. Simard in DREV-P, 9615 publication in March 1997 entitled "Theoretical and Experimental Characterizations of the IR Technology for the Detection of Low-Metal and Nonmetallic Buried Landmines".

It is well documented, for instance in the DREV-R 9615 publication, that the performance of daytime mine detection by infrared imaging is significantly worse, on average, than the performance of nighttime imaging. The probability of detection (Pd) in the daytime, on the average, is significantly lower and the false alarm rate (FAR) is significantly higher than at night. This lower Pd and higher FAR is mainly due to daytime solar radiation being scattered from random irregularities and inhomogeneities in the ground surface resulting in an increase in background clutter. The solar radiation that causes this clutter is, of course, absent at night. In order to reduce the effects of this clutter on IR images, the present invention places an optical band filter in front of the foreoptics of the infrared imager. This is illustrated in Figure I where an infrared camera 12 is mounted on an arm 18 attached to the front of a vehicle 10 with an optical band filter 14 positioned in front of the lens of camera 12. The filter could, however, be placed immediately in front of the camera's sensing element instead of in front of the camera's lens. The camera is movable in order to be able to scan the soil surface in front of the vehicle. The filter is one selected to pass radiation in a wavelength band in which solar radiation is generally absent or highly attenuated at the earth's surface due to absorption by the molecular aerosol or particulate constituents of the atmosphere with radiation outside that band being strongly attenuated. The filter selected for this application ensures that very little solar radiation that scatters from the soil surface reaches the camera's sensor, thereby largely eliminating the clutter in infrared images obtained.

There are a number of suitable bands that could be selected for the band pass optical filter. The widest is the band between the MWIR and TIR which extends from roughly 5520 nm to 7080 nm which transmits virtually no solar radiation at sea level. MWIR bands which transmit almost no solar radiation include the 4156-4420 nm band, the 5420-5480 nm band and numerous narrow (<20 nm) bands such as those near 3315 nm, 4960 nm, 5020 nm, 5090 nm and 5150 nm. There are fewer in the TIR band below 13500 nm, since all absorption bands transmit some solar radiation. The best choices are the narrow atmospheric absorption bands near 8040 nm or 8160 nm. Finally, there is a broad band below the nominal MWIR band but above the SWIR band, from 2552 nm to 2800 nm.

The optimal waveband to select for the filter is determined by a trade off of several factors. The band should be as wide as possible to allow as much of the radiation from the ground as possible to be detected by the imager. Another advantage of selecting a wide band is that lower tolerances on the position of the filter's lower and upper cutoff wavelengths are allowable compared to narrow band filters. This is an important feature since the cutoff wavelengths of interference filters, the most common kind of band pass filter in the infrared, are dependent on the angle of incidence of the incoming radiation. A wide field of view, therefore, may make a narrow band filter difficult or impossible to realize. Since the ground and associated anomalies appear as black bodies or grey bodies with temperatures roughly near 300 degrees Kelvin, the chosen filter band should be in the TIR band or as close to it as possible, where most of the black body radiation energy is contained. The selected bands should ideally transmit negligible solar radiation. The atmospheric column between the detector and the ground, however, also absorbs the back body radiation to be detected. Thus the chosen band should have atmospheric transmittances which are significant over the distances between the target location on the ground.

Many of the bands mentioned above would provide significant solar radiation rejection. The best, however, would be the 5520 nm to 7080 nm body since it is the widest band amongst those discussed and passes the most radiation for a 300 degree Kelvin black body. The radiance from a black body will be reduced by roughly a factor of 10 by introducing a perfect band pass filter from 5520-7080 nm compared to that measured by an unfiltered TIR imaginer with a nominal pass band of 8000-12000 nm. However, in practice the variation in ground radiance is typically orders of magnitude smaller than the magnitude of the radiance so there is more than enough radiation available after filtering for detection. In fact, the black body radiation in the 5520-7080 nm band is roughly 10 times higher than the black body radiation in the 3000-5000 nm band which is routinely used for mine detection.

The absorption of black body radiation by the atmospheric column between the detector and the ground, which was previously mentioned, is mainly due to water vapour in this 5520-7080 nm band. Estimations, using tables and graphs of atmospheric absorption for standard environments, show that the transmittance through a 10 m column is >99% in a worst case maritime environment at sea level and is roughly 87% through a 300 m column.

Filters, normally interference type, are commercially available for the selected bands. These type of filters are typically made to order based on the specifications such as the band center, width, range of incidence angles, temperature range, etc. The prices range from hundreds to several thousand dollars but this is a small fraction of the price for an IR imager.

MWIR or TIR imagers are obviously suitable for the selected filtering techniques if the chosen band is in the MWIR or TIR bands. In the 5520-7080 nm band, many commercial off-the-shelf TIR imagers exist that could be used. These imagers have a good response in that waveband provided that the manufacturer has not deliberately filtered out radiation outside the TIR or MWIR bands. The same applies to the 2552-2800 nm band. HgCdTe is a common TIR sensing element, for instance, and has a significant response from less than 2000 m wavelengths to 12000 nm. Microbolometer sensing elements can also be tuned to be sensitive in the MWIR, TIR and between the MWIR and TIR bands. Both Ge and ZnSe, the two main materials used in TIR imaging optics, have good transmission properties from 2000 to 12000 m.

## Claims

1. A landmine detector comprising an infrared camera (12) mounted on a vehicle (10) for travel along the ground and positionable to obtain thermal signatures of a soil surface near the vehicle (10) where a buried landmine might exist with an optical band filter (14) positioned to allow radiation to be transmitted to the camera's infrared sensor through the filter (14), the optical band filter (14) being one selected to pass radiation in at least one wavelength band where solar radiation is highly attenuated at the earth's surface due to absorption by the atmosphere, the filter (14) attenuating transmission of radiation outside of any bands selected

2. A landmine detector as defined in claim 1, wherein the optical band filter (14) is selected to pass radiation in a wavelength band selected from one of four bands, a 2552-2800 nm band, a 4156-4420 nm band, a 5420-5480 nm band and a 5520-7080 nm band.

3. A landmine detector as defined in claim 2, wherein the optical band filter (14) is transmissive to radiation in the 2552-2800 nm band.

4. A landmine detector as defined in claim 2, wherein the optical band filter (14) is transmissive to radiation in the 4156-4420 nm band.

5. A landmine detector as defined in claim 2, wherein the optical band filter (14) is transmissive to radiation in the 5420-5480 nm band.

6. A landmine detector as defined in claim 2, wherein the optical band filter (14) is transmissive to radiation in the 5520-7080 nm band.

7. A landmine detector as defined in any of claims 2 to 6, wherein the infrared sensor is an IR sensing element formed of HgCdTe.

8. A landmine detector as defined in any of claims 3 to 6, wherein the infrared sensor is one with at least one microbolometer infrared sensing element.

## Patentansprüche

1. Landminensuchgerät bestehend aus einer auf einem sich am Boden bewegenden Fahrzeug (10) montierter Infrarotkamera (12), die so positionierbar ist, dass sie Wärmesignaturen einer Bodenoberfläche in Nähe des Fahrzeugs (10) dort aufnimmt, wo eine Landmine vergraben sein könnte, mit einem optischen Bandfilter (14), der so positioniert ist, dass Strahlung durch den Filter (14) an den Infrarotsensor der Kamera übertragen werden kann, wobei der optische Bandfilter (14) so gewählt wird, dass er Strahlung auf mindestens einem Wellenlängenband durchlässt, wo Sonnenstrahlung auf der Erdoberfläche durch atmosphärische Absorption gedämpft wird, wobei der Filter (14) die Übertragung der Strahlung außerhalb der gewählten Bänder dämpft.

2. Landminensuchgerät nach Anspruch 1, **dadurch gekennzeichnet, dass** der optische Bandfilter (14) so gewählt wird, dass er Strahlung auf einem Wellenlängenband durchlässt, das aus einem unter vier Bändern - einem 2552-2800-nm-Band, einem 4156-4420-nm-Band, einem 5420-5480-nm-Band und einem 5520-7080-nm-Band - gewählt wird.

3. Landminensuchgerät nach Anspruch 2, **dadurch gekennzeichnet, dass** der optische Bandfilter (14) auf dem 2552-2800-nm-Band strahlungsdurchlässig ist.

4. Landminensuchgerät nach Anspruch 2, **dadurch gekennzeichnet, dass** der optische Bandfilter (14) auf dem 4156-4420-nm-Band strahlungsdurchlässig ist.

5. Landminensuchgerät nach Anspruch 2, **dadurch gekennzeichnet, dass** der optische Bandfilter (14) auf dem 5420-5480-nm-Band strahlungsdurchlässig ist.

6. Landminensuchgerät nach Anspruch 2, **dadurch gekennzeichnet, dass** der optische Bandfilter (14) auf dem 5520-7080-nm-Band strahlungsdurchlässig ist.

7. Landminensuchgerät nach einem der Ansprüche 2 bis 6, **dadurch gekennzeichnet, dass** der Infrarotsensor einen aus HgCdTe gebildeten IR-Messfühler darstellt.

8. Landminensuchgerät nach einem der Ansprüche 3 bis 6, **dadurch gekennzeichnet, dass** der Infrarotsensor einen IR-Messfühler mit mindestens einem Mikrobolometer darstellt.

## Revendications

1. Détecteur de mines terrestres constitué d'une caméra infrarouge (12) montée sur un véhicule (10) se déplaçant sur le sol et pouvant être positionnée pour obtenir les signatures thermiques de la surface du sol près dudit véhicule (10), où une mine terrestre pourrait être enfouie, doté d'un filtre de bande optique (14) positionné de façon à permettre la transmission du rayonnement au capteur infrarouge de la caméra à travers le filtre (14), le filtre de bande optique (14) étant choisi pour laisser passer les radiations dans au moins une bande de longueurs d'onde dans laquelle le rayonnement solaire est fortement atténué à la surface terrestre en raison de l'absorption atmosphérique, le filtre (14) atténuant la transmission du rayonnement à l'extérieur des bandes sélectionnées.

2. Détecteur de mines terrestres défini dans la revendication 1, dans lequel le filtre de bande optique (14) est choisi pour laisser passer les radiations dans l'une des quatre bandes de longueurs d'onde ci-après : 2552-2800 nm, 4156-4420 nm, 5420-5480 nm et 5520-7080 nm.

3. Détecteur de mines terrestres défini dans la revendication 2, dans lequel le filtre de bande optique (14) transmet les radiations dans la bande 2552-2800 nm.

4. Détecteur de mines terrestres défini dans la revendication 2, dans lequel le filtre de bande optique (14) transmet les radiations dans la bande 4156-4420 nm.

5. Détecteur de mines terrestres défini dans la revendication 2, dans lequel le filtre de bande optique (14) transmet les radiations dans la bande 5420-5480 nm.

6. Détecteur de mines terrestres défini dans la revendication 2, dans lequel le filtre de bande optique (14) transmet les radiations dans la bande 5 520-7080 nm.

7. Détecteur de mines terrestres défini dans l'une ou l'autre des revendications 2 à 6, dont le capteur infrarouge est un élément sensible aux IR composé de HgCdTe.

8. Détecteur de mines terrestres défini dans l'une ou l'autre des revendications 3 à 6, dans lequel le capteur infrarouge comporte au moins un élément sensible aux infrarouges à microbolomètre.
